# EUROPÄISCHE PATENTSCHRIFT

(11) **EP 0 526 461 B1**
(45) Veröffentlichungstag und Bekanntmachung des Hinweises auf die Patenterteilung: **24.05.1995**
(21) Anmeldenummer: 91904880.1
(22) Anmeldetag: 06.03.1991
(51) Int. Cl.: F16K 31/04

(54) **ARMATUR ZUM ABSPERREN EINER STRÖMUNG**
SHUT-OFF VALVE
VANNE SERVANT A ARRETER UN ECOULEMENT

(30) Priorität: 25.04.1990 DE 4013176
(43) Veröffentlichungstag der Anmeldung: 10.02.1993
(73) Patentinhaber: SIEMENS AKTIENGESELLSCHAFT, 80333 München (DE)
(72) Erfinder: SCHABERT, Hans-Peter, D-8520 Erlangen (DE); LAURER, Erwin, D-8521 Möhrendorf (DE)
(86) Internationale Anmeldenummer: DE9100200
(87) Internationale Veröffentlichungsnummer: WO9116561

(56) Entgegenhaltungen:
- EP-A- 0 193 776
- DE-A- 3 314 781
- DE-C- 2 437 778
- US-A- 2 992 807
- US-A- 3 327 826
- US-A- 4 021 015

## Beschreibung

Die Erfindung bezieht sich auf eine Armatur zum Absperren einer Strömung gemäß dem Oberbegriff der Hauptansprüche. Eine solche Armatur ist z.B. aus der DE-A- 3 314 781 bekannt.

Armaturen zum Absperren einer Strömung haben häufig eine mit einem Verschlußstück, beispielsweise ein Ventilkegel oder ein Ventilteller, versehene axial verschiebbare Spindel, die von einer in einem Gehäuse drehbar gelagerten Spindelmutter bewegt wird. Beim Hineinfahren des Verschlußstückes in den Sitz ist ein vorgegebenes Drehmoment erforderlich. Dieses Drehmoment hängt ab vom Auslegungsdruck in der abzusperrenden Strömung, von der Spindelgeometrie und vom Reibwert im Gewinde der Spindelmutter. Für ein Hochdruck-Ventil mit der Nennweite 25 mm ist beispielsweise ein Drehmoment-Sollwert (Mindestwert) von etwa 30 Nm üblich. Durch Korrosion können sich jedoch nach langer Standzeit die Reibwerte im Gewinde der Spindelmutter beträchtlich erhöhen. Zum Lösen der Spindelmutter sind dann entsprechend höhere Drehmomente, beispielsweise etwa 80 Nm, erforderlich.

Ein Stellantrieb für die Armatur muß dann so ausgelegt werden, daß er dieses hohe Lösemoment auch bei ungünstigen Betriebsbedingungen aufbringen kann. Bei einem elektromotorischen Stellantrieb kann dies beispielsweise eine niedrige, durch Schwankungen der Netzspannung verursachte Versorgungsspannung sein. Bei hoher Netzspannung, kalter Wicklung im Elektromotor, positiver Motorfertigungstoleranz und hoher Armaturensteifigkeit kann der Stellantrieb dann jedoch ein viel höheres Drehmoment entwickeln, wenn er nicht drehmomentabhängig abgeschaltet wird. Bei ungünstiger Zusammenwirkung aller Toleranzen kann dieses Drehmoment beispielsweise auf 300 Nm ansteigen. Versagt die drehmomentabhängige Abschaltung, so kann im ungünstigen Fall somit ein Drehmoment auftreten, das dem 10-fachen des Solldrehmomentes entspricht. Die Spindel wird dann stark überlastet und möglicherweise geknickt.

In der EP-B1-0 193 776 ist eine Armatur offenbart, bei der das vom Stellantrieb zur Erzeugung der Spindelkraft zur Verfügung gestellte Drehmoment bereits während der Stellbewegung verringert wird. Hierzu ist eine Bremsbuchse vorgesehen, die sich mit stirnseitigen Gleitflächen auf einem Bremsgehäuse abstützt und nach einem leeren Drehwinkel von etwa 330° von der Spindelmutter mitgedreht wird. Beim Zurückdrehen der Spindelmutter entfällt dann die Bremsung über den Leerwinkelbereich, so daß das vom Stellantrieb erzeugte Drehmoment vollständig zum Lösen der im Muttergewinde verspannten Spindel zur Verfügung steht. Das in der Bremse entstehende Bremsmoment wird bereits vor Erreichen der Endlage wirksam und ist proportional der Spindelkraft und dem Reibwert der Gleitflächen. Diese Bremse kann beispielsweise so ausgelegt werden, daß sie beim Hineinfahren in die Endstellung etwa 75 % des Antriebsdrehmoments aufzehrt. Entsprechend dem vorgenannten Zahlenbeispiel bedeutet dies, daß der Antrieb nicht für ein Mindestdrehmoment von 30 Nm, sondern von 120 Nm ausgelegt werden müßte. Er wird dann in vielen Fällen zu aufwendig und gewichtsmäßig zu schwer. Außerdem werden dann die beim Absteuerversagen unter ungünstigen Bedingungen auftretenden Drehmomente ebenfalls entsprechend erhöht.

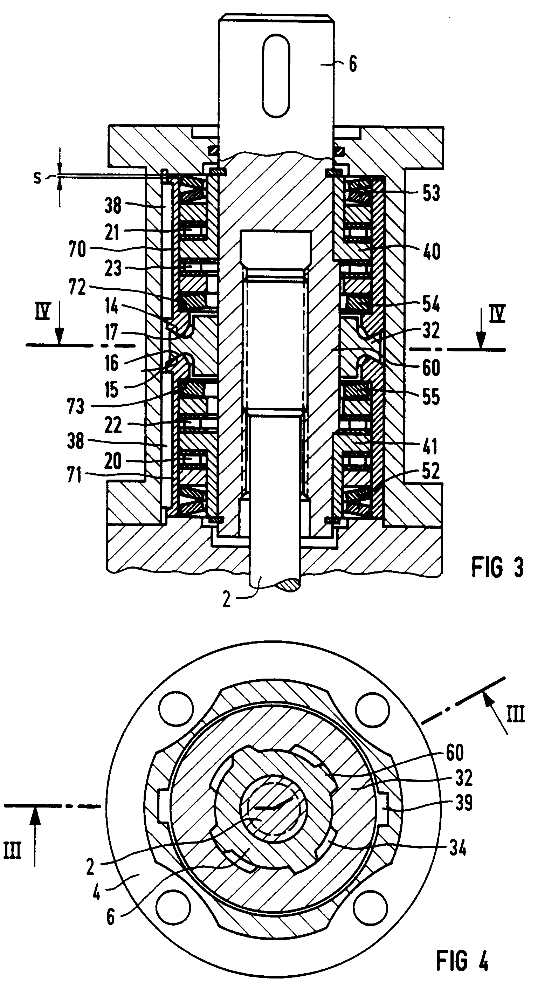

Aus der deutschen Offenlegungsschrift 33 14 781 ist aus der Figur 4 eine Armatur bekannt, bei der die Spindelmutter erst nach Überschreiten einer vorgegebenen Spindelkraft zusätzlich gebremst wird. Dies wird dadurch erreicht, daß die Spindelmutter im Armaturengehäuse axial federnd gelagert und mit einem Anlaufring versehen ist, der bei Überschreiten einer vorgegebenen Spindelkraft gegen eine aus Ringfedern bestehende und sich im Gehäuse abstützende Bremsbuchse gepreßt wird. Durch das zwischen dem Anlaufring und den Bremsbuchsen erzeugte Bremsmoment wird eine Bremswirkung erzeugt, so daß nur ein Teil des vom Antrieb zur Verfügung gestellten Drehmomentes auf die Spindel wirksam wird. Durch diese Maßnahmen kann eine Überlastung der Spindel bei einem sogenannten Absteuerversagen wirksam verhindert werden.

Bei dieser bekannen Armatur muß jedoch dieses zusätzliche Bremsmoment beim nachfolgenden Lösen der Spindelmutter ebenfalls aufgebracht werden. Da sich außerdem nach einer längeren Standzeit auch die Reibwerte in den Bremsflächen der Spindelmutterbremse erhöhen, sind zum Lösen der Spindelmutter Drehmomente erforderlich, die wiederum höher sein können als die beim Absteuerversagen aufgetretenen Drehmomente. Ein Lösen der Gewindemutter ist unter diesen Umständen kaum möglich.

Der Erfindung liegt nun die Aufgabe zugrunde, eine Armatur mit einer Bremseinrichtung zum Beherrschen des Absteuerversagens anzugeben, bei der die Spindelmutter auch bei wirksam gewordener Bremseinrichtung noch leicht gelöst werden kann.

Die genannte Aufgabe wird gelöst mit den Merkmalen der unabhängigen Ansprüche. Bei wirksam gewordener Bremseinrichtung sind wenigstens zwei Reibflächen gegeneinander gepreßt und bilden eine Bremsfläche. Eine Reibfläche ist drehfixiert mit dem Gehäuse und die andere Reibfläche ist drehfixiert mit dem drehbar gelagerten Gewindeteil verbunden. Da für die Drehfixierung wenigstens einer der beiden Reibflächen ein vorgegebener Leerwinkel vorgesehen ist, wird beim Lösen des drehbaren Gewindeteils diese Reibfläche während der Drehbewegung innerhalb des Leerwinkels nicht mitbewegt. Zum Lösen des drehbaren Gewindeteils muß somit das in den Reibflächen wirksame Bremsmoment nicht aufgebracht werden, sondern lediglich das Drehmoment für das Lösen des Gewindes und für das übliche reibungsarme Axiallager des drehbar gelagerten Gewindeteils. Während der Drehbewegung des drehbaren Gewindeteils im Leerwinkelbereich werden die beiden Reibflächen entlastet und die Bremswirkung zwischen den beiden Reibflächen ganz oder teilweise aufgehoben. Der Leerwinkel kann sowohl für die mit dem Gehäuse drehfixiert verbundene Reibfläche als auch für die mit dem drehbaren Gewindeteil drehfixiert verbundene Reibfläche vorgesehen sein. Der Leerwinkel entspricht dabei vorzugsweise einem Hub der Spindelmutter von etwa 0,3 mm, wenigstens etwa 0,01 mm. Während der Leerwinkel durchlaufen wird sorgt in einer bevorzugten Ausgestaltung ein reibungsarmes Lager, insbesondere ein Wälzlager, für die Übertragung der entstehenden Bremskraft.

Zur Erhöhung der Bremswirkung ist es vorteilhaft, mehrere einander zugewandte Reibflächen derart gegeneinander verschiebbar anzuordnen, daß sich bei Überschreiten der Sollkraft mehrere Bremsflächen bilden. Dabei bestehen jeweils einander zugewandte Reibflächen vorzugsweise aus einem unterschiedlichen Werkstoff, beispielsweise eine Reibfläche aus Messing oder Bronze und die andere Reibfläche aus Stahl.

In einer bevorzugten Ausführungsform sind die mit dem Gehäuse drehfixiert verbundenen Reibflächen an der Stirnfläche einer in einem Gehäuse axial verschiebbar angeordneten Bremshülse angeordnet. In einer weiteren bevorzugten Ausgestaltung der Erfindung befinden sich die mit dem drehbaren Gewindeteil drehfixiert verbundenen Reibflächen auf wenigstens einem axial verschiebbar auf diesem Gewindeteil angeordneten Bremsring.

Die Bremsringe sind auf ihrer Innenfläche vorzugsweise mit wenigstens drei Ausnehmungen für einen mit dem drehbaren Gewindeteil drehmomentschlüssig verbundenen Mitnehmerzahn versehen. Die Ausnehmungen und der ihnen jeweils zugeordnete Mitnehmerzahn sind vorzugsweise mit schrägen Flanken versehen. Dadurch entsteht eine Selbstzentrierung des Bremsringes, so daß er mit einem ausreichenden radialen Spiel, vorzugsweise mehr als 0,02 mm, gegen das drehbar gelagerte Teil ausgestattet werden kann. Beim Durchlaufen des Leerwinkels berühren sich dann Bremsring und drehbar gelagertes Gewindeteil nicht.

In einer weiteren bevorzugten Ausführungsform sind konische Reibflächen vorgesehen. Dadurch wird das wirksame Bremsmoment erhöht. Die Reibflächen können zusätzlich mit einem auch unter Schmiermittel gut wirksamen Reibbelag versehen sein. Zusätzlich ist es von Vorteil, wenn die Reibflächen mit schmiermittelverdrängenden Radialnuten versehen sind. Durch diese Maßnahmen wird eine vom Schmierzustand der Reibflächen nur wenig abhängige Bremswirkung erzielt.

Eine besonders gute Bremswirkung wird erzielt, wenn die mittlere Entfernung der Reibflächen von der Mittelachse des axial verschiebbaren Gewindeteils wenigstens das Doppelte des Flankenradius des Gewindes beträgt.

In einer vorteilhaften Ausgestaltung der Erfindung sind mehrere Federgruppen derart vorgesehen, daß sich für die federnde Lagerung des drehbaren Gewindeteils im Gehäuse bei Überschreiten einer vorgegebenen Sollkraft eine höhere Federsteifigkeit als bei Unterschreiten dieser Sollkraft ergibt. Die kann dadurch bewirkt werden, daß eine erste Federgruppe für die Sollkraft und eine zweite Federgruppe für die bei Überschreiten dieser Sollkraft zusätzlich auftretende Bremszusatzkraft oder für die Gesamtkraft vorgesehen ist. Insbesondere sind für alle Federgruppen nur baugleiche Tellerfedern vorgesehen. Die unterschiedliche Federsteifigkeit kann dann durch eine entsprechende Schichtung erzielt werden.

Das axial verschiebbare Gewindeteil kann beispielsweise eine im Gehäuse drehfixierte Spindel oder eine im Gehäuse drehfixierte Mutter sein.

Eine zuverlässige Beherrschung eines Absteuerversagens wird insbesondere dann erzielt, wenn die erfindungsgemäße Armatur mit einem Stellantrieb versehen wird, bei dem durch mechanische oder elektrische Mittel, wie sie beispielsweise in der EP-B1-0 193 776 offenbart sind, erreicht wird, daß beim Herausfahren aus der Endstellung ein höheres Drehmoment bereitgestellt wird als beim Hineinfahren in die Endstellung.

Zur weiteren Erläuterung der Erfindung wird auf die Ausführungsbeispiele der Zeichnung verwiesen, in deren
FIG 1 und 2 eine Armatur gemäß der Erfindung in einem Längs- bzw. einem Querschnitt schematisch dargestellt ist.
FIG 3 und 4 zeigen ein weiteres vorteilhaftes Ausführungsbeispiel einer Armatur mit zwei wirksamen Bremsflächen ebenfalls in einem Längs- bzw. Querschnitt. In
FIG 5 ist eine besonders bevorzugte Ausgestaltung einer Armatur gemäß der Erfindung mit drei wirksamen Bremsflächen ebenfalls in einem Längsschnitt dargestellt.

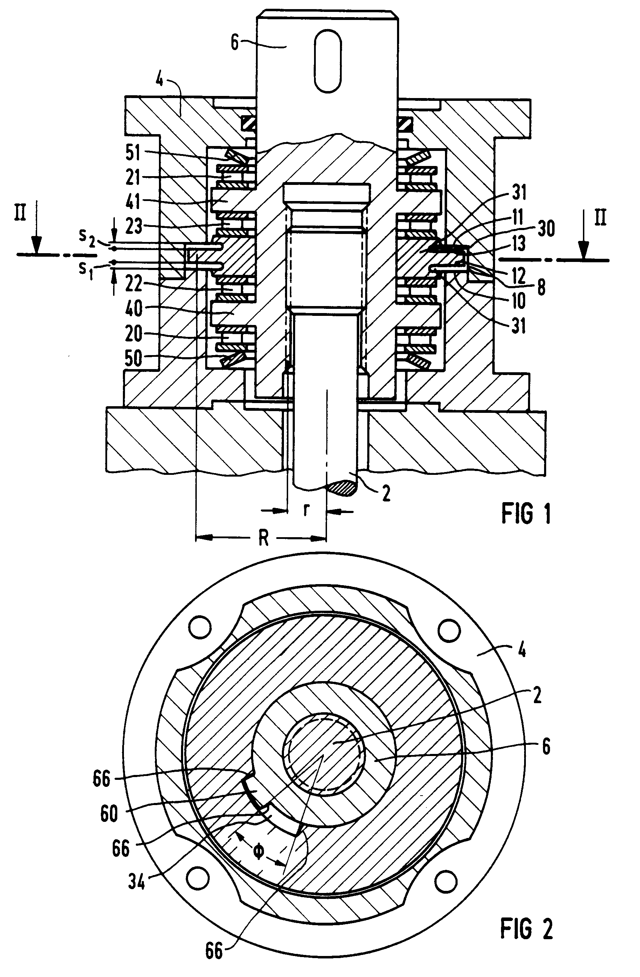

Gemäß **FIG 1** enthält eine Armatur als drehfixiertes Gewindeteil eine Spindel 2 mit einem in der Figur nicht näher dargestellten Verschlußstück, die von einer drehbar in einem Gehäuse 4 gelagerten Spindelmutter 6 in Axialrichtung bewegbar ist. Die Spindelmutter 6 ist mit zwei Mitnehmerflanschen 40 und 41 versehen, die sich jeweils über Wälzlager 20 bzw. 21 und Federgruppen 50 bzw. 51 im Gehäuse 2 abstützen. Das Verschlußstück hat zwei Endstellungen, die es am Ventilsitz bzw. am Rücksitz erreicht.

Mit der Spindelmutter 6 ist drehfixiert ein Bremsring 30 verbunden, der mit einem vorgegebenen Spiel gegenüber der Spindelmutter 6 drehbar auf Wälzlagern 22 und 23 gelagert ist. Der Bremsring 30 läuft in seinem äußeren Randbereich in einer ringförmigen Nut 8 des Gehäuses 4. Die Stirnflächen im Randbereich des Bremsringes 30 und die Seitenflächen der Ringnut 8 sind als ringförmige Reibflächen 12, 13 bzw. 10, 11 ausgebildet. Die Reibflächen 10 bis 13 sind vorzugsweise mit einem schmiermittelverdrängenden Reibbelag oder mit schmiermittelverdrängenden Radialnuten versehen, so daß sich kein zusammenhängender Schmierfilm ausbilden kann. Die Reibbeläge der am Bremsring 30 und am Gehäuse 4 befindlichen Reibflächen 12, 13 bzw. 10, 11 bestehen vorzugsweise aus unterschiedlichen Werkstoffen, beispielsweise aus Messing und aus Stahl. Zwischen den Reibflächen 12 und 13 des Bremsringes 30 und den Reibflächen 10 bzw. 11 der Ringnut 8 ist jeweils ein Spiel s₁ bzw. s₂ eingestellt, das in kräftefreier Ruhelage der Spindel 2 in etwa gleich groß ist. Bei sich drehender Spindelmutter 6 und sich axial verschiebener Spindel 2 stellen sich Spiele s₁ und s₂ ein, die von der Federsteifigkeit der Federgruppen 50 und 51 und von den durch Reibung im Muttergewinde verursachten Bremsmomenten abhängen.

Gemäß **FIG 2** ist die Spindelmutter 6 mit einem Mitnehmerzahn 60 versehen, der in eine Ausnehmung 34 des Bremsringes 30 greift. Nach Überstreichen eines Leerwinkels φ berühren sich die Flanken 66 von Mitnehmerzahn 60 und Ausnehmung 34 und es ergibt sich eine drehmomentschlüssige Verbindung zwischen der Spindelmutter 6 und dem Bremsring 30. Dieser Leerwinkel φ ist wenigstens so groß, daß der zu ihm gehörende Spindelhub wenigstens etwa 0,01 mm beträgt. Vorzugsweise ist jedoch ein Leerwinkel φ vorgesehen, der beispielsweise einen Spindelhub von etwa 0,1 mm bis 0,5 mm bewirkt. Bei einem Muttergewinde 24 x 3 (Trapezgewinde) entspricht dies einem Leerwinkel φ zwischen 12° und 60°.

Am Ende des Fahrwegs der Spindel 2, wenn das Verschlußstück den Ventilsitz erreicht hat, steigt die auf die Spindel 2 ausgeübt Kraft steil an und die Spindelmutter 6 beginnt gegen die Federwirkung einer Federgruppe, beispielsweise bei nach unten fahrender Spindel 2 gegen die Federwirkung der Federgruppe 51, zu steigen und der Mitnehmerflansch 40 bewegt den Bremsring 30 nach oben. Das Spiel s₂ zwischen oberer Reibfläche 13 des Bremsringes 30 und der Reibfläche 11 der Ringnut 8 wird kleiner und verschwindet bei einer vorgegebenen Sollkraft auf die Spindel 2, beispielsweise etwa 15 kN, die sich im wesentlichen aus dem Federweg und den Federsteifigkeiten der Federgruppen 50 und 51 ergibt.

Während der Hubbewegung der Spindelmutter 6 wird der Leerwinkel φ des Drehspiels des Bremsringes 30 aufgebraucht und der Bremsring 30 wird von der Spindelmutter 6 mitgedreht (FIG 2). Die Reibflächen 11 und 13 werden mit einer Bremszusatzkraft aneinandergepreßt und bilden eine Bremsfläche. Somit entsteht ein zusätzliches Bremsmoment, das vom mittleren Abstand R der Reibflächen von der Spindelachse, der Spindelkraft und dem Reibungskoeffizienten der aus den Reibflächen 12 und 13 gebildeten Bremsfläche abhängt. Da der Abstand R größer als Flankenradius r des Muttergewindes ist, ergibt sich eine wirksame Begrenzung der vom Antrieb auf die Spindel 2 ausgeübten Axialkraft. Der Abstand R beträgt vorzugsweise wenigstens das Doppelte, insbesondere das Dreifache des Flankenradius r. Durch diese Maßnahme wird bei einem Absteuerversagen des Antriebes eine Ausknickung der Spindel 2 vermieden.

Zum Lösen der Spindel 2 aus der Endstellung wird die Drehbewegung der Spindelmutter 6 umgekehrt. Durch den verfügbaren Leerwinkel φ der Drehfixierung zwischen Spindelmutter 6 und Spindel 2 wird die drehmomentschlüssige Verbindung zwischen der Spindelmutter 6 und dem Bremsring 30 gelöst und das gesamte Antriebsmoment steht zum Lösen der im Muttergewinde verspannten Spindel 2 zur Verfügung. Zugleich wird die aus den Reibflächen 11 und 13 gebildete Bremsfläche durch eine Axialbewegung der Spindelmutter 6 entlastet. Wenn dann nach Durchlaufen des Leerwinkels φ die Reibfläche 13 mitgedreht wird, ist die Bremswirkung ganz oder überwiegend aufgehoben, so daß das vom Stellantrieb verfügbare Drehmoment problemlos zum Weiterdrehen ausreicht.

In einer weiteren Aussgestaltung kann auch der Bremsring 30 federnd zwischen den Mitnehmerflanschen 40 und 41 gelagert sein. Dies kann entweder durch zwei weitere Federgruppen, die sich beispielsweise jeweils zwischen den Mitnehmerflanschen 40, 41 und den Wälzlagern 22 bzw. 23 befinden, oder durch einen selbst als Federelement gestalteten Bremsring 30 bewirkt werden. Dies ist im Beispiel der Figur durch einen Bremsring 30 verwirklicht, der mit zwei Einstichen 31 versehen ist. Diese Einstiche 31 verleihen dem Bremsring 30 eine tellerfederartige Nachgiebigkeit. Diese Federgruppen bzw. der als Federelement gestaltete Bremsring 30 haben vorzugsweise eine höhere Federsteifigkeit als die Federgruppen 50 und 51 und werden dann wirksam, wenn das Spiel s₁ oder s₂ verschwindet. Die Spindelmutter 6 ist dann auch nach Verschwinden des Spiels s₁ oder s₂ federnd im Gehäuse 4 gelagert, allerdings mit wesentlich erhöhter Federsteifigkeit.

Anstelle einer Ringnut 8 können im Gehäuse 4 auch in Analogie in der aus der Figur 4 der DE-A1-3 314 781 Ringfedern vorgesehen sein, gegen deren Stirnflächen der Bremsring 30 bei Überschreiten der Sollkraft gepreßt wird.

Eine entsprechende Ausgestaltung, bei der die Spindelmutter auch nach Verschwinden des Spiels s federnd gelagert ist, ist bei der vorteilhaften Ausführungsform der Erfindung gemäß **FIG 3** verwirklicht. Im Gehäuse 4 sind zwei axial verschiebbare Bremshülsen 70 und 71 vorgesehen, die mit Paßfedern 38 gegen Verdrehung gesichert sind. Die Spindelmutter 6 ist über Federgruppen 52 und 53, die entsprechend dem Beispiel der Figur jeweils aus zwei in Reihe geschalteten Tellerfedern aufgebaut sind, federnd im Gehäuse gelagert. Die Bremshülsen 70 und 71 sind jeweils mit Schultern 72 bzw. 73 versehen, die jeweils über weitere Federgruppen 54 bzw. 55 und Wälzlager 23 bzw. 22 mit den Mitnehmerflanschen 40 bzw. 41 der Spindelmutter 6 kraftschlüssig verbunden sind. Die Federgruppen 54 bzw. 55 haben vorzugsweise eine größere Federkonstante als die Federgruppen 52 und 53. Die Federgruppen 54 bzw. 55 sind im Beispiel der Figur jeweils aus einer einzigen Tellerfeder aufgebaut. Vorzugsweise sind jedoch die Federgruppen 54 und 55 jeweils aus mehreren parallelgeschichteten Tellerfedern aufgebaut, die baugleich mit den Tellerfedern der Federgruppen 52 und 53 sind.

Die in der Figur 3 dargestellten Federgruppen 53 für die Sollkraft und 54 für die Bremszusatzkraft wirken parallel wenn das Spiel s aufgebraucht ist. Wenn beide Kräfte einen Wert von beispielsweise 15 kN erreichen, dann wirkt auf die Spindel eine Gesamtkraft von 30 kN. Durch eine nicht dargestellte geänderte Federanordnung ist es auch möglich, die Federgruppen in der Weise hintereinander zu schalten, daß die steifere Federgruppe 54 die Gesamtkraft übernimmt, während die weichere Federgruppe 53 nach Erreichen ihrer Sollkraft 15 kN und Verschwinden des Spiels S keiner weiteren Erhöhung ihrer Belastung mehr ausgesetzt wird.

Aus der Steifigkeit der Federgruppen 54 und 55 kann man ein Kriterium für einen sinnvollen Maximalwert des Leerwinkels φ ableiten. Nimmt man nämlich für eine ungünstige Betriebssituation an, daß der Bremsring 32 seinen Leerwinkel φ gegenüber der Gewindemutter 6 erst zurückzulegen beginnt, wenn die Bremswirkung bestimmungsgemäß nach Erreichen der Sollkraft eigentlich schon wirksam werden sollte, so setzt die Bremswirkung um den Leerwinkel φ verzögert und abrupt mit einem durch die Wirkung der Federgruppe 54 oder 55 bereits stark angestiegenen Wert der axialen Bremszusatzkraft ein. Diese Bremszusatzkraft darf jedoch die Spindel 2 nicht überlasten. Der sinnvolle Größtwert des Leerwinkels richtet sich also nach dem axialen Weg der Federgruppe 54 bzw. 55 bis zum Aufbau einer noch zulässigen axialen Bremszusatzkraft. Als Anhaltswert hierfür kann man die doppelte Sollkraft angeben, im Zahlenbeispiel also 2 x 15 kN = 30 kN. Dies würde dann zu einer Spindelgesamtkraft von etwa 30 kN + 15 kN = 45 kN führen.

Die Bremshülse 70 und 71 sind an ihren einander zugewandten Stirnflächen mit konisch geformten Reibflächen 14 bzw. 15 versehen, die an ebenfalls konische Reibflächen 17 bzw. 16 eines mit der Spindelmutter 6 mit einem vorgegebenen Leerwinkel drehfixiert verbundenen Bremsringes 32 preßbar sind. Der Bremsring 32 ist auf der Spindelmutter 6 axial verschiebbar angeordnet. Durch die bei festfahrender Spindel 2 beispielsweise steigende Spindelmutter 6 wird die Federgruppe 52 entlastet und die Bremshülse 71 durch den Mitnehmerflansch in Kontakt mit dem Bremsring 32 gebracht, der sodann axial nach oben verschoben wird und die Bremshülse 70 mitnimmt, bis der Spalt s zwischen der Bremshülse 70 und dem Gehäuse 4 verschwindet. Die Reibflächen 14 und 17 sowie 15 und 16 werden einander gepreßt und bilden zwei durch die Tellerfedern 54 und 55 abgefederde Bremsflächen. Durch die Verwendung zweier Bremsflächen wird das wirksame Bremsmoment gegenüber der Ausführungsform nach FIG 1 erhöht. Eine weitere Erhöhung des Bremsmomentes wird außerdem durch die konische Ausgestaltung der Reibflächen 14 bis 17 bewirkt.

Beim Lösen der Spindelmutter wird durch den Leerwinkel φ zwischen dem Bremsring 32 und der Spindelmutter 6 die Bremsfläche ebenfalls entlastet. **FIG 4** zeigt eine bevorzugte Ausgestaltung der Drehfixierung zwischen Spindelmutter 6 und Bremshülse 32, bei der vier Mitnehmerzähne 60 und vier Ausnehmungen 34 vorgesehen sind. Sowohl die Mitnehmerzähne 60 als auch die Ausnehmungen 34 sind dabei vorzugsweise mit schrägen Flanken 66 versehen.

Der Leerwinkel φ kann auch bei den Bremshülsen durch entsprechende Ausnehmungen und Ausformungen im Gehäuse 4 und in den Bremshülsen 70 bzw. 71 verwirklicht werden.

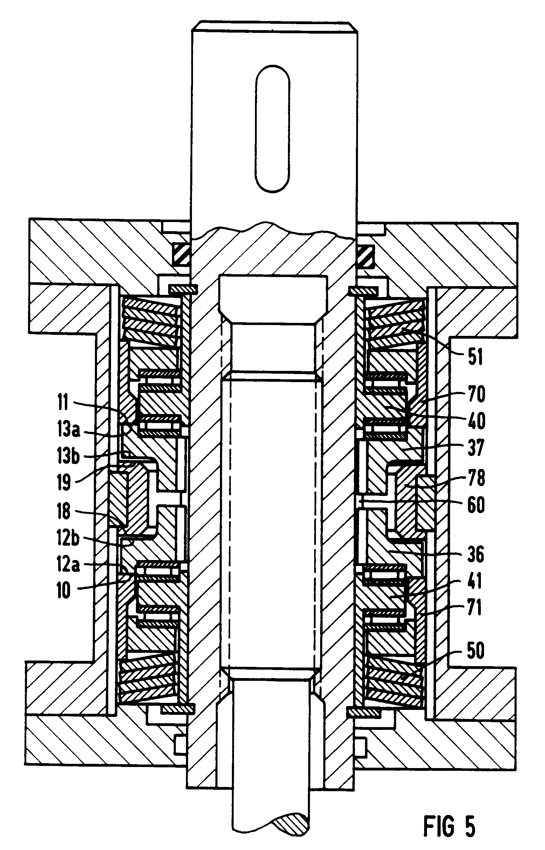

In der Ausführungsform gemäß **FIG 5** sind zwei mit der Spindelmutter 6 drehfixierte axial verschiebbare Bremsringe 36 und 37 vorgesehen, die jeweils mit zwei Reibflächen 12a, 12b bzw. 13a, 13b versehen sind. Zwischen den Bremsringen 36 und 37 ist an der Innenwand des Gehäuses 4 eine axial verschiebbare und mit dem Gehäuse drehfixiert verbundene Bremshülse 78 vorgesehen. Den Reibflächen 12a und 13a ist jeweils die Reibfläche 10 bzw. 11 einer weiteren Bremshülse 71 bzw. 70 zugeordnet. Bei steigender Spindelmutter 6 wird der Bremsring 36 vom Mitnehmerflansch 41 gegen die Bremshülse 78 gedrückt, die nach oben gegen den Bremsring 37 axial verschoben wird und den Bremsring 37 gegen die Wirkung der Federgruppe 51 gegen die Bremshülse 70 drückt. Bei diesem Aufbau ergeben sich drei gemeinsam wirksame Bremsflächen und das beim Festfahren der Spindel 2 verfügbare Bremsmoment ist weiter erhöht. Auch bei dieser Ausführungsform können entweder die Bremsringe 36 und 37 mit einem Leerwinkel φ drehfixiert mit der Spindelmutter 6 oder die Bremshülsen 70, 71 und 78 mit einem Leerwinkel φ mit dem Gehäuse 4 verbunden sein.

In den Figuren sind stets Ausführungsbeispiele dargestellt, bei denen die Spindelmutter im Gehäuse drehbar und die Spindel drehfixiert ist. Die Erfindung ist jedoch auch auf Armaturen anwendbar, bei denen die Spindel von oben kommend in einer mit dem Verschlußstück verbundenen und im Gehäuse drehfixierten Mutter drehbar ist. Dann tritt der Lagerkörper am oberen Ende der Spindel an die Stelle der in den Figuren beschriebenen Spindelmutter.

## Patentansprüche

1. Armatur, insbesondere zum Absperren einer Strömung, mit einem in einem Gehäuse (4) drehfixierten und axial verschiebbaren Gewindeteil (2), einem im einem Gehäuse (4) axial federnd und drehbar gelagerten Gewindeteil (6) sowie einer Bremseinrichtung mit wenigstens zwei einander zugewandten Reibflächen (11, 13, 15, 16), die bei Überschreiten einer vorgegebenen Sollkraft auf das drehfixierte Gewindeteil (2) zum Abbremsen der Drehbwegung des drehbaren Gewindeteils (6) durch eine Axialverschiebung gegeneinander gepreßt werden und eine Bremsfläche bilden, wobei eine der jeweils einander zugewandten Reibflächen (11, 15) drehfixiert im Gehäuse (4) angeordnet und die andere (13, 16) drehfixiert mit dem drehbaren Gewindeteil (6) verbunden ist, **dadurch gekennzeichnet**, daß sich die mit dem drehbaren Gewindeteil (6) drehfixiert verbundene Reibfläche (13, 16) auf wenigstens einem axial verschiebbar auf diesem Gewindeteil (6) angeordneten Bremsring (32) befindet, wobei für die Drehfixierung wenigstens einer der einander zugewandten Reibflächen (11, 13, 15, 16) ein vorgegebener Leerwinkel (φ) vorgesehen ist.

2. Armatur, insbesondere zum Absperren einer Strömung, mit einem in einem Gehäuse (4) drehfixierten und axial verschiebbaren Gewindeteil (2), einem im einem Gehäuse (4) axial federnd und drehbar gelagerten Gewindeteil (6) sowie einer Bremseinrichtung mit wenigstens zwei einander zugewandten Reibflächen (15, 16), die bei Überschreiten einer vorgegebenen Sollkraft auf das drehfixierte Gewindeteil (2) zum Abbremsen der Drehbwegung des drehbaren Gewindeteils (6) durch eine Axialverschiebung gegeneinander gepreßt werden und eine Bremsfläche bilden, wobei eine der jeweils einander zugewandten Reibflächen (15) drehfixiert im Gehäuse (4) angeordnet und die andere (16) drehfixiert mit dem drehbaren Gewindeteil (6) verbunden ist, **dadurch gekennzeichnet**,
daß die mit dem Gehäuse (4) drehfixiert verbundene Reibfläche (15) an einer Stirnfläche einer im Gehäuse (4) axial verschiebbaren Bremshülse (71) angeordnet ist, wobei für die Drehfixierung wenigstens einer der einander zugewandten Reibflächen (15,16) ein vorgegebener Leerwinkel (φ) vorgesehen ist.

3. Armatur nach Anspruch 1 oder 2, **dadurch** **gekennzeichnet**, daß zur Kraftübertragung auf die Reibflächen (11, 13, 15, 16) ein reibungsarmes Lager vorgesehen ist.

4. Armatur nach einem der Ansprüche 1 bis 3,
**dadurch gekennzeichnet**, daß der Leerwinkel (φ) für die mit dem drehbaren Gewindeteil (6) drehfixiert verbundenen Reibflächen (12, 13, 16, 17) vorgesehen ist.

5. Armatur nach einem der Ansprüche 1 bis 4,
**dadurch gekennzeichnet**, daß der Leerwinkel (φ) einem Hub des drehbaren Gewindeteils (6) von wenigstens 0,01 mm entspricht.

6. Armatur nach einem der Ansprüche 1 bis 5,
**dadurch gekennzeichnet**, daß mehrere einander zugewandte Reibflächen (14, 15, 16, 17) derart gegeneinander verschiebbar angeordnet sind, daß sich bei Überschreiten der Sollkraft mehrere Bremsflächen (14, 17 und 15, 16) bilden.

7. Armatur nach Anspruch 6,
**dadurch gekennzeichnet**, daß der oder die Bremsringe (32) auf ihrer Innenfläche mit wenigstens einer Ausnehmung (34) für einen an dem drehbaren Gewindeteil (6) angeordneten Mitnehmerzahn (60) versehen ist.

8. Armatur nach Anspruch 7,
**dadurch gekennzeichnet**, daß wenigstens drei Ausnehmungen (34) vorgesehen sind.

9. Armatur nach Anspruch 8,
**dadurch gekennzeichnet**, daß die Ausnehmungen (34) und der ihnen jeweils zugeordnete Mitnehmerzahn (60) mit schrägen Flanken (66) versehen sind.

10. Armatur nach Anspruch 8 oder 9,
**dadurch gekennzeichnet**, daß zwischen dem drehbaren Gewindeteil (6) und dem Bremsring (32) ein Radialspiel von wenigstens 0,02 mm vorgesehen ist.

11. Armatur nach einem der Ansprüche 1 bis 10,
**dadurch gekennzeichnet**, daß konische Reibflächen (14, 15, 16, 17) vorgesehen sind.

12. Armatur nach einem der Ansprüche 1 bis 11,
**dadurch gekennzeichnet**, daß die Reibflächen (10 bis 19) mit einen auch unter Schmiermittel wirksamen Reibbelag versehen sind.

13. Armatur nach Anspruch 12,
**dadurch gekennzeichnet**, daß die Reibflächen (10 is 19) mit schmiermittelverdrängenden Radialnuten versehen sind.

14. Armatur nach einem der Ansprüche 1 bis 13,
**dadurch gekennzeichnet**, daß die mittlere Entfernung der Reibflächen (10 bis 19) von der Mittenachse des axial verschiebbaren Gewindeteils (2) wenigstens das Doppelte des Flankenradius des Gewindes beträgt.

15. Armatur nach einem der Ansprüche 1 bis 14,
**dadurch gekennzeichnet**, daß mehrere Federgruppen (52, 53 und 54, 55) derart vorgesehen sind, daß sich für die federnde Lagerung des drehbaren Gewindeteils (6) im Gehäuse bei Überschreiten einer vorgegebenen Sollkraft eine höhere Federsteifigkeit als bei Unterschreiten dieser Sollkraft ergibt.

16. Armatur nach Anspruch 15,
**dadurch gekennzeichnet**, daß eine erste Federgruppe (50) für die Sollkraft und eine zweite Federgruppe (30) für die zusätzliche Bremszusatzkraft oder für die Gesamtkraft vorgesehen ist.

17. Armatur nach Anspruch 16,
**dadurch gekennzeichnet**, daß die Federgruppen jeweils aus wenigstens einer Tellerfeder aufgebaut sind.

18. Armatur nach Anspruch 17, **dadurch gekennzeichnet**, daß für die Federgruppen nur baugleiche Tellerfedern vorgesehen sind.

19. Armatur nach Anspruch 16,
**dadurch gekennzeichnet**, daß als zweite Federgruppe (30) ein als Federelement gestalteter Bremsring (30) vorgesehen ist.

20. Armatur nach einem der Ansprüche 1 bis 19,
**dadurch gekennzeichnet**, daß als axial verschiebbares Gewindteil (2) eine im Gehäuse (4) drehfixierte Spindel (2) vorgesehen ist.

21. Armatur nach einem der Ansprüche 1 bis 19,
**dadurch gekennzeichnet**, daß als axial verschiebbares Gewindeteil eine im Gehäuse (4) drehfixierte Mutter vorgesehen ist.

## Claims

1. Fitting, in particular for shutting off a flow, having a threaded part (2) rotationally fixed and axially displaceable in a housing (4), a threaded part (6) mounted in an axially resilient and rotatable manner in a housing (4) as well as a braking device with at least two friction surfaces (11, 13, 15, 16) facing one another, which are pressed against one another by way of an axial displacement upon the exceeding of a specified predetermined force on the rotationally fixed threaded part (2) for braking the rotary movement of the rotatable threaded part (6) and form a braking surface, with one of the friction surfaces (11, 15) which in each case face one another being arranged in a rotationally fixed manner in the housing (4) and the other one (13, 16) being connected in a rotationally fixed manner to the rotatable threaded part (6), characterized in that the friction surface (13, 16) connected in a rotationally fixed manner to the rotatable threaded part (6) is located on at least one brake ring (32) arranged in an axially displaceable manner on this threaded part (6), whereby for the rotational fixing of at least one of the friction surfaces (11, 13, 15, 16) facing one another a specified free angle (φ) is provided.

2. Fitting, in particular for shutting off a flow, having a threaded part (2) rotationally fixed and axially displaceable in a housing (4), a threaded part (6) mounted in an axially resilient and rotatable manner in a housing (4) as well as a braking device with at least two friction surfaces (15, 16) facing one another, which are pressed against one another by way of an axial displacement upon the exceeding of a specified predetermined force on the rotationally fixed threaded part (2) for braking the rotary movement of the rotatable threaded part (6) and form a braking surface, with one of the friction surfaces (15) in each case facing one another being arranged in a rotationally fixed manner in the housing (4) and the other one (16) being connected in a rotationally fixed manner to the rotatable threaded part (6), characterized in that the friction surface (15) connected in a rotationally fixed manner to the housing (4) is arranged on a front surface of a braking sleeve (71) axially displaceable in the housing (4), whereby for the rotational fixing of at least one of the friction surfaces (15, 16) facing one another a specified free angle (φ) is provided.

3. Fitting according to claim 1 or 2, characterized in that a low-friction bearing is provided for transmitting force to the friction surfaces (11, 13, 15, 16).

4. Fitting according to one of claims 1 to 3, characterized in that the free angle (φ) is provided for the friction surfaces (12, 13, 16, 17) connected in a rotationally fixed manner to the rotatable threaded part (6).

5. Fitting according to one of claims 1 to 4, characterized in that the free angle (φ) corresponds to a stroke of the rotatable threaded part (6) of at least 0.01 mm.

6. Fitting according to one of claims 1 to 5, characterized in that several friction surfaces (14, 15, 16, 17) facing one another are arranged so as to be displaceable against one another in such a way that upon the exceeding of the predetermined force several braking surfaces (14, 17 and 15, 16) form.

7. Fitting according to claim 6, characterized in that the brake ring(s) (32) is (are) provided on its (their) inner surface with at least one recess (34) for a carrier cog (60) arranged on the rotatable threaded part (6).

8. Fitting according to claim 7, characterized in that at least three recesses (34) are provided.

9. Fitting according to claim 8, characterized in that the recesses (34) and the carrier cog (60) respectively associated therewith are provided with inclined edges (66).

10. Fitting according to claim 8 or 9, characterized in that a radial clearance of at least 0.02 mm is provided between the rotatable threaded part (6) and the brake ring (32).

11. Fitting according to one of claims 1 to 10, characterized in that conical friction surfaces (14, 15, 16, 17) are provided.

12. Fitting according to one of claims 1 to 11, characterized in that the friction surfaces (10 to 19) are provided with a friction lining which is also effective in the presence of a lubricant.

13. Fitting according to claim 12, characterized in that the friction surfaces (10 to 19) are provided with radial grooves which remove lubricant.

14. Fitting according to one of claims 1 to 13, characterized in that the average distance of the friction surfaces (10 to 19) from the centre axis of the axially displaceable threaded part (2) amounts to at least twice the edge radius of the thread.

15. Fitting according to one of claims 1 to 14, characterized in that several spring groups (52, 53 and 54, 55) are provided in such a way that for the resilient bearing of the rotatable threaded part (6) in the housing a greater spring rigidity results upon the exceeding of a specified predetermined force than when this predetermined force is fallen short of.

16. Fitting according to claim 15, characterized in that a first spring group (50) is provided for the predetermined force and a second spring group (30) is provided for the further additional brake force or for the total force.

17. Fitting according to claim 16, characterized in that the spring groups are in each case assembled from at least one cup spring.

18. Fitting according to claim 17, characterized in that only cup springs of the same construction are provided for the spring groups.

19. Fitting according to claim 16, characterized in that a brake ring (30) formed as spring element is provided as second spring group (30).

20. Fitting according to one of claims 1 to 19, characterized in that a spindle (2) rotationally fixed in the housing (4) is provided as axially displaceable threaded part (2).

21. Fitting according to one of claims 1 to 19, characterized in that a nut rotationally fixed in the housing (4) is provided as axially displaceable threaded part.

## Revendications

1. Robinet, notamment pour arrêter un écoulement, comportant une partie filetée (2) immobilisée en rotation et mobile axialement dans un boîtier (4), une partie filetée (6) montée dans un boîtier (4) de manière à tourner et axialement élastique, ainsi qu'un dispositif de freinage avec au moins deux surfaces de frottement (11, 13, 15, 16) ayant tournées l'une vers l'autre et qui, lors du dépassement d'une force de consigne prédéfinie, sont pressées sur la partie filetée immobilisée en rotation (2) pour freiner le mouvement de rotation de la partie filetée rotative (6), et ce par un déplacement axial l'une vers l'autre pour constituer une surface de freinage, l'une des surfaces de frottement (11, 15), tournées l'une vers l'autre étant immobilisée en rotation dans le boîtier (4) et l'autre (13, 16) étant solidaire en rotation de la partie filetée rotative (6), caractérisé en ce que la surface de frottement (13, 16) solidaire en rotation de la partie filetée rotative (6) se trouve sur au moins une bague de freinage (32) montée mobile axialement sur cette partie filetée (6), tandis qu'il est prévu pour l'immobilisation en rotation d'au moins l'une des surfaces de frottement (11, 13, 15, 16) tournées l'une vers l'autre un angle de débattement (φ) prédéfini.

2. Robinet, notamment pour arrêter un écoulement, comportant une partie filetée (2) immobilisée en rotation et mobile axialement dans un boîtier (4), une partie filetée (6) montée dans un boîtier (4) de manière à tourner et axialement élastique, ainsi qu'un dispositif de freinage ayant au moins deux surfaces de frottement (15, 16) tournées l'une vers l'autre et qui, lors du dépassement d'une force de consigne prédéfinie, sont pressées sur la partie filetée immobilisée en rotation, (2) pour freiner le mouvement de rotation de la partie filetée rotative (6), et ce par un déplacement axial l'une vers l'autre pour constituer une surface de freinage, l'une (15) des surfaces de frottement, tournées l'une vers l'autre, étant immobilisée en rotation dans le boîtier (4) et l'autre (16) étant solidaire en rotation de la partie filetée rotative (6),
caractérisé en ce que la surface de frottement (15) solidaire en rotation du boîtier (4) est disposée sur la face frontale d'un manchon de freinage (71) axialement mobile dans le boîtier (4), tandis qu'il est prévu pour l'immobilisation et la rotation d'au moins l'une des surfaces de frottement (15, 16), tournées l'une vers l'autre, un angle de débattement (φ) prédéfini.

3. Robinet selon la revendication 1 ou 2,
caractérisé en ce qu'il est prévu un palier antifriction pour la transmission des forces aux surfaces de frottement (11, 13, 15, 16).

4. Robinet selon l'une des revendications 1 à 3,
caractérisé en ce que l'angle de débattement (φ) est prévu pour les surfaces de frottement (12, 13, 16, 17) solidaires en rotation de la partie filetée rotative (6).

5. Robinet selon l'une des revendications 1 à 4,
caractérisé en ce que l'angle de débattement (φ) correspond à une course d'au moins 0,01 mm de la partie filetée rotative (6).

6. Robinet selon l'une des revendications 1 à 5,
caractérisé en ce que plusieurs surfaces de frottement (14, 15, 16, 17), tournées les unes vers les autres, sont disposées mobiles les unes vers les autres de telle manière que, lors du dépassement de la force de consigne, elles constituent plusieurs surfaces de freinage (14, 17 et 15, 16).

7. Robinet selon la revendication 6,
caractérisé en ce que la ou les bagues de freinage (32) sont pourvues sur leur face intérieure d'au moins un évidement (34) pour une dent d'entraînement (60) prévue sur la partie filetée rotative (6).

8. Robinet selon la revendication 7,
caractérisé en ce qu'il est prévu au moins trois évidements (34).

9. Robinet selon la revendication 8,
caractérisé en ce que les évidements (34) et la dent d'entraînement (60) qui leur est chaque fois associée sont pourvus de flancs obliques (66).

10. Robinet selon la revendication 8 ou 9,
caractérisé en ce qu'il est prévu un jeu radial d'au moins 0,02 mm entre la partie filetée rotative (6) et la bague de freinage (32).

11. Robinet selon l'une des revendications 1 à 10,
caractérisé en ce qu'il est prévu des surfaces de frottement coniques (14, 15, 16, 17).

12. Robinet selon l'une des revendications 1 à 11,
caractérisé en ce que les surfaces de frottement (10 à 19) sont pourvues d'une garniture de friction, également efficace en présence d'un lubrifiant.

13. Robinet selon la revendication 12,
caractérisé en ce que les surfaces de frottement (10 à 19) sont pourvues de rainures radiales de refoulement de lubrifiant.

14. Robinet selon l'une des revendications 1 à 13,
caractérisé en ce que la distance moyenne des surfaces de frottement (10 à 19) à l'axe médian de la partie filetée (2) axialement mobile représente au moins deux fois le rayon de flanc du filetage.

15. Robinet selon l'une des revendications 1 à 14,
caractérisé en ce qu'il est prévu plusieurs groupes de ressorts (52, 53 et 54, 55) de telle manière que l'on obtienne, pour le montage élastique de la partie filetée rotative (6) dans le boîtier, une plus grande rigidité des ressorts lors du dépassement d'une force de consigne prédéfinie que lorsque cette force de consigne n'est pas atteinte.

16. Robinet selon la revendication 15,
caractérisé en ce qu'il est prévu un premier groupe de ressorts (50) pour la force de consigne et un second groupe de ressorts (30) pour la force auxiliaire de freinage supplémentaire ou bien pour la force totale.

17. Robinet selon la revendication 16,
caractérisé en ce que les groupes de ressorts sont chacun constitués d'au moins un ressort à disques

18. Robinet selon la revendication 17,
caractérisé en ce qu'il est prévu, pour les groupes de ressorts, uniquement des ressorts à disques de conception identique.

19. Robinet selon la revendication 16,
caractérisé en ce qu'il est prévu, en tant que second groupe de ressorts (30) une bague de freinage (30) conformée en élément faisant ressort.

20. Robinet selon l'une des revendications 1 à 19,
caractérisé en ce qu'il est prévu, en tant que partie filetée (2) mobile axialement, une tige (2) immobilisée en rotation dans le boîtier (4).

21. Robinet selon l'une des revendications 1 à 19,
caractérisé en ce qu'il est prévu, en tant que partie filetée mobile axialement un écrou immobilisé en rotation dans le boîtier (4).
